**Europäisches Patentamt**

(19) **European Patent Office**

**Office européen des brevets**

(11) Publication number: **0 022 253**
**B1**

## (12) EUROPEAN PATENT SPECIFICATION

(45) Date of publication of patent specification: **24.08.83**

(51) Int. Cl.³: **G 01 K 1/04, G 01 W 1/17**

(21) Application number: **80103790.4**

(22) Date of filing: **03.07.80**

(54) Individual gauge for the microclimate index.

(30) Priority: **07.07.79 IT 2414179**

(43) Date of publication of application:
**14.01.81 Bulletin 81/2**

(45) Publication of the grant of the patent:
**24.08.83 Bulletin 83/34**

(84) Designated Contracting States:
**BE DE FR GB**

(56) References cited:
**FR - A - 1 269 516**
**US - A - 3 831 435**
**US - A - 3 855 863**

(73) Proprietor: **INDUSTRIE PIRELLI S.p.A.**
**Piazzale Cadorna, 5**
**I-20123 Milan (IT)**

(72) Inventor: **Sassi, Carlo**
**Via della Rosa n. 13**
**Segrate (Milan) (IT)**
Inventor: **Vicini, Antonio**
**Viale Monza 79**
**Milan (IT)**

(74) Representative: **Gernhardt, Claus, Dipl.-Ing.**
**Dr. Elisabeth Jung Dr. Jürgen Schirdewahn Dipl.-Ing. Claus Gernhardt Patentanwälte**
**Clemensstrasse 30**
**D-8000 München 40 (DE)**

Courier Press, Leamington Spa, England.

## Individual gauge for the microclimate index

The present invention refers to an individual gauge for the microclimate index, i.e. to a device to be applied to a person for measuring the thermal stresses to which said person is subjected.

It is known that the determination of the thermal stresses to which a person is subjected, in particular during the work, is very important in order to be able to prevent diseases.

At present, devices for measuring individual microclimate indexes of a person are not known and at present the determination of the individual microclimate is made by measuring the single microclimate parameters in a predetermined position within a zone of the room and assigning to the persons present in said room zone the value found in said predetermined position.

It is evident that the measurement of the microclimate index made up to now in a predetermined position of a room is very unsatisfactory since said measurement assigns the same value to persons who operate at different positions of the room and move and work within said room in manners different from one another and therefore are subjected to greatly different thermal stresses.

Moreover, the known devices for measuring the microclimate in a predetermined position within a room are very encumbering, very delicate and involve too long a transition time.

In fact, the known devices for measuring the microclimate index, generally called W B G T index, involve the use of two thermometers and precisely a wet bulb thermometer and a globe thermometer.

In particular, the globe-thermometer is a very encumbering instrument since it is constituted by a hollow sphere of copper, blackened on the outer surface, whose diameter is of 15 cm, said sphere containing a thermometer whose bulb is fixed in the center of the sphere.

Moreover, the globe thermometer involves a transition time of 25 minutes during which the values notified by it are not significant for the determination of the microclimate.

From US—A—3 855 863 a device is known for measuring the microclimate index in a predetermined position within a room. The known device uses as a black body a hollow sphere. In the known device a reduction of the transition time of the globe thermometer accompanied by a reduction of the diameter of the hollow sphere to values of 1,65 inches forming said globe thermometer is obtained. Nevertheless, it is not possible to use the said known device as an individual gauge since the dimensions of the globe thermometer are still too great for realizing an individual gauge. Furthermore, there is no immediate or fast response as requested for an individual gauge.

In US—A—3 831 435 a miniaturized wet bulb thermometer is described the dimensions of which are smaller than those of the wet bulb thermometer described in US—A—3 855 863, where it is used an open cup filled with water from which a wick projects. Even if the wet bulb thermometer according to US—A—3 855 863 should be replaced by the wet bulb thermometer according to US—A—3 831 435, no individual gauge can be obtained because of the encumbrance and the long response time of the bulb globe thermometer according to US—A—3 855 863.

The object of the present invention is to provide a device which can be applied to the body or to the clothes of a person and which is able to measure the microclimate parameters surrounding said person and to store the data by means of a memory having a transition time of practically zero.

Said object is accomplished by providing a gauge for the microclimate index comprising a first thermoelectric sensor associated with a wick projecting from an envelope filled with water, a second thermoelectric sensor associated with a black body, and an electronic circuit connected to the first and second sensor and comprising an adder and integrating circuit emitting a signal which corresponds to the wet bulb globe temperature, which is characterized by the fact that the black body is a metallic bowl having a blackened surface, said second thermoelectric sensor being bound to the geometrical centre of the non blackened bowl surface, that the envelope filled with water is a closed envelope, and that an electromagnetic memory associated with the electronic circuit is provided for recording the signals which correspond to the wet bulb globe temperature.

The present invention will be better understood by the following detailed description made by way of non-limiting example with reference to the figure of the enclosed sheet of drawing, in which:

Figure 1 shows in perspective view a device according to the present invention;

Figure 2 shows a partial section view of a device according to the present invention according to line II—II of Figure 1.

In the most general idea of realization of an individual gauge for microclimate parameters, said gauge comprises two thermoelectric sensors, as for example thermoelectric couples, thermoresistances, thermistors and the like, and precisely a first thermoelectric sensor connected to a wick projecting from a closed envelope filled with water, and a second thermoelectric sensor associated with a black body constituted by a metallic bowl having a blackened surface said second thermoelectric sensor being bound to the geometrical centre of the non blackened bowl surface.

The two thermoelectric sensors are connected, in association with the timer, to a first adder circuit and subsequently to a second signal integrating circuit which makes the operations that will be described later on, and this signal integrating circuit is in its turn associated with a signal storing circuit from which said signals can be drawn when desired.

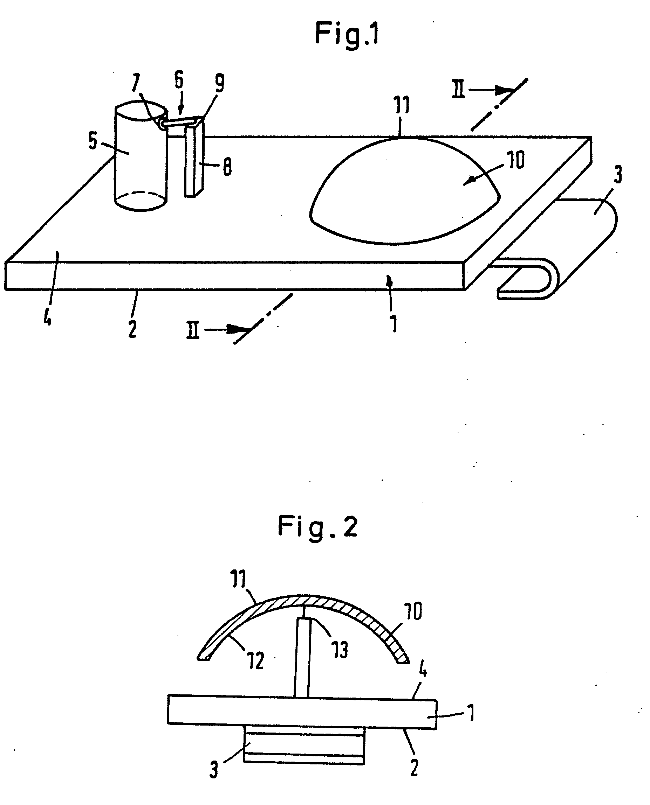

Figures 1 and 2 show a microclimate individual gauge according to the present invention falling within the above explained general idea.

As shown in the figures 1 and 2, an individual gauge for the microclimate index according to the present invention comprises a box-shaped body 1 to which a hook 3 or the like is bound at face 2 for connecting said box-shaped body 1 to the clothes of a person.

A closed envelope 5, containing water, is bound on the face 4 of the box-shaped body 1. A wick 6, projecting with one end from said envelope 5 through a hole 7 obtained in the envelope wall, is immersed in the water contained in the envelope 5.

On the side of the closed envelope 5 there is a thermoelectric sensor, represented by a thermoelectric couple 8 (or other equivalent sensor) connected to the end 9 of the wick 6, and said thermoelectric couple 8 senses the temperature of the end 9 of the wick 6 and emits a signal, the intensity of said signal depends on the temperature of said end 9 of the wick 6.

A bowl 10, preferably in the shape of a semispherical bowl of metallic material, is bound to the face 4 of the box-shaped body 1 (see also figure 2). The convex surface 11 of said semispherical bowl 10, which is blackened, is directed away from the gauge, i.e. does not face the face 4 of the box-shaped body 1.

A thermoelectric sensor 13, represented by a thermoelectric couple or other equivalent sensor, is bound (for example by a welding operation) to the geometrical center of the concave surface 12 of the spherical bowl 10, said sensor emits signals, the intensity of said signals depends on the temperature existing in the focus of the spherical bowl 10.

The electric signals emitted by the thermocouples or other equivalent sensors 8 and 13 are integrated by circuits not shown and not described (but contained in the box-shaped body 1 and activated according to a frequency pre-established by a timer) since said circuits can be realized by any technician of the field on the basis of the operations which they must perform and which will be described later on when the operation of the gauge for the microclimate index according to the present invention will be explained.

The signals integrated by the above indicated electric circuit are stored in an electromagnetic circuit, encased in the box-shaped body 1, too, and not shown and not described, but of a known type, from which it is possible to read out the stored signals when desired.

Obviously, within the box-shaped body 1 there are also electric energy sources, as for example piles, for the operation of the previously indicated circuits.

According to an alternative embodiment not shown, the spherical bowl 10 has the concave surface 12 blackened and directed away from the gauge, i.e. said surface is arranged so as not to be in front of the face 4 of the box-shaped body 1, and the thermocouple 13 or other equivalent sensor is bound in correspondence of the geometric centre of the convex surface 11 which is instead turned towards the face 4 of said box-shaped body 1.

The operation of an individual gauge for the microclimate index according to the present invention is the following:

An operator, for whom it is desired to determine the thermal stresses to which he is subjected during a pre-established period, applies to his clothes the device shown in figure 1 by the hook 3.

During the interval of the pre-established time, depending on the humidity variations of the ambient surrounding the operator, the intensity of the signals "tu" emitted by the thermocouple 8 or other equivalent sensor changes and at the same time, in consequence of the variations of radiant energy striking the operator, the signals "tg" emitted by the thermocouple 13 or other equivalent sensor change.

The signals emitted by the thermocouples 8 and 13 or other equivalent sensors reach, according to a preestablished frequency for intervention of a timer, the adder and integrating circuits which elaborate them, emitting signals T according to the following formula pre-established by regulations issued by American Conference of Governmental Industrial Hygienists, relating to the thermal stresses:

$$0.3 \ tg + 0.7 \ tu = T$$

The signals are sent to the storing circuits which record them.

At the end of the pre-established period of time, the operator takes away from his clothes the device shown in figure 1 and said device is placed into communication, through an electric cable, with an apparatus, known per se, which reads out the signals stored by the individual gauge for microclimate index and records and/or visualizes them.

From the above description it is clear that by means of an individual gauge for the microclimate index according to the present invention, the aimed purposes are reached.

In fact, the use of a gauge for the microclimate index according to the present invention permits to really determine, for each person, the thermal stresses to which the same is subjected.

The fact is important for realizing an efficacious prevention of diseases due to thermal stresses and this is made possible by miniaturing the elements necessary for the determination of the microclimate index and in particular by miniaturing the element which measures the radiations striking the user, with the particular realization of said instrument previously described.

Although some particular embodiments of the invention have been illustrated and described, it is understood that the invention includes any other alternative embodiment falling within the scope of the invention itself as claimed in the attached claims.

## Claims

1. Gauge for the microclimate index comprising a first thermoelectric sensor (8) associated with a wick (6) projecting from an envelope (5) filled with water, a second thermoelectric sensor (13) associated with a black body (10), and an electronic circuit connected to the first and second sensor and comprising an adder and integrating circuit emitting a signal which corresponds to the wet bulb globe temperature, characterized by the fact that the black body is a metallic bowl (10) having a blackened surface, said second thermoelectric sensor (13) being bound to the geometrical centre of the non blackened bowl surface (12), that the envelope filled with water is a closed envelope (5), and that an electromagnetic memory associated with the electronic circuit is provided for recording the signals which correspond to the wet bulb globe temperature.

2. Gauge for the microclimate index according to claim 1, characterized by the fact that the blackened surface of the metallic bowl (10) is the convex surface (11), said second thermoelectric sensor (13) being bound to the concave surface (12) of the bowl.

3. Gauge for the microclimate index according to claim 1, characterized by the fact that the blackened surface of the metallic bowl (10) is the concave surface (12), said second thermoelectric sensor (13) being bound to the convex surface (11) of the bowl.

4. Gauge for the microclimate index according to anyone of the claims 2 and 3, characterized by the fact that the metallic bowl (10) is a spherical metallic bowl.

## Revendications

1. Appareil de mesure pour l'index de microclimat comprenant un premier détecteur thermoélectrique (8) associé à une mèche (6) saillant d'une enveloppe (5) remplie d'eau, un second détecteur thermoélectrique (13) associé à un corps noir (10) et un circuit électronique connecté auxdits premier et second détecteurs et comprenant un circuit d'addition et d'intégration émettant un signal qui correspond à la température du globe du bulbe mouillé, caractérisé en ce que ledit corps noir est une cuvette metallique (10) ayant une surface noircie, ledit second détecteur thermoélectrique (13) étant attaché au centre géometrique de la surface (12) non noircie de ladite cuvette, que l'enveloppe remplie d'eau est une enveloppe fermée (5) et qu'une mémoire électromagnétique associée au circuit électronique est prevue, ayant le but d'enregistrer les signaux qui correspondent à la température dudit globe du bulbe mouillé.

2. Appareil de mesure pour l'index de microclimat suivant la revendication 1, caractérisé en ce que la surface noircie de ladite cuvette métallique (10) est la surface convexe (11), ledit second détecteur thermoélectrique (13) étant attaché à la surface concave (12) de ladite cuvette.

3. Appareil de mesure pour l'index de microclimat suivant la revendication 1, caractérisé en ce que la surface noircie de la cuvette métallique (10) est la surface concave (12), ledit second détecteur thermoélectrique (13) étant attaché à la surface convexe (11) de ladite cuvette.

4. Appareil de mesure pour l'index de microclimat suivant une quelconque des revendications 2 et 3, caractérisé par le fait que ladite cuvette métallique (10) est une cuvette métallique sphérique.

## Patentansprüche

1. Apparat zum Messen des Mikroklimatindex, mit einem ersten thermoelektrischen Fühler (8), der einem Docht (6) zugeordnet ist, welcher von einer mit Wasser gefüllten Umhüllung (5) vorragt, mit einem zweiten thermoelektrischen Fühler (13), der einem schwarzen Körper (10) zugeordnet ist, und mit einer elektronischen Schaltung, die mit dem ersten und dem zweiten Fühler verbunden ist und eine Addier- und Integrierschaltung aufweist, die ein Signal aussendet, welches der Feuchttemperatur entspricht, dadurch gekennzeichnet, daß der schwarze Körper eine Metallschale (10) ist, die eine geschwärzte Fläche hat, der zweite thermoelektrische Fühler (13) mit dem geometrischen Zentrum der nichtgeschwärzten Schalenfläche (12) verbunden ist, daß die mit Wasser gefüllte Umhüllung eine geschlossene Umhüllung (5) ist, und daß ein der elektronischen Schaltung zugeordneter elektromagnetischer Speicher vorgesehen ist, um die Signale aufzunehmen, die der Feuchttemperatur entsprechen.

2. Apparat zum Messen des Mikroklimatindex nach Anspruch 1, dadurch gekennzeichnet, daß die geschwärzte Fläche der Metallschale (10) die konvexe Fläche (11) ist, und daß der zweite thermoelektrische Fühler (13) mit der konkaven Fläche (12) der Schale verbunden ist.

3. Apparat zum Messen des Mikroklimatindex nach Anspruch 1, dadurch gekennzeichnet, daß die geschwärzte Fläche der Metallschale (10) die konkave Fläche (12) ist, und daß
der zweite thermoelektrische Fühler (13) mit der
konvexen Fläche (11) der Schale verbunden ist.

4. Apparat zum Messen des Mikroklimatindex nach einem der Ansprüche 2 und 3, dadurch gekennzeichnet, daß die Metallschale
(10) eine sphärische Metallschale ist.

# Fig.1

# Fig.2